Europäisches Patentamt

European Patent Office

Office européen des brevets

(11) Veröffentlichungsnummer : **0 147 515**
**B1**

# (12) EUROPÄISCHE PATENTSCHRIFT

(45) Veröffentlichungstag der Patentschrift :
30.09.87

(21) Anmeldenummer : **84108206.8**

(22) Anmeldetag : **12.07.84**

(51) Int. Cl.⁴ : **F 16 B 25/10**

(54) Selbstschneidende Schnellbauschraube.

(30) Priorität : **23.12.83 DE 3346704**

(43) Veröffentlichungstag der Anmeldung :
**10.07.85 Patentblatt 85/28**

(45) Bekanntmachung des Hinweises auf die Patenterteilung : **30.09.87 Patentblatt 87/40**

(84) Benannte Vertragsstaaten :
**AT BE CH DE FR GB IT LI NL SE**

(56) Entgegenhaltungen :
**DE-A- 2 353 375**
**DE-A- 2 539 365**
**DE-A- 2 613 720**
**DE-A- 2 636 494**
**DE-A- 2 801 962**
**DE-B- 1 500 798**
**US-A- 3 916 757**

(73) Patentinhaber : **Richter-System GmbH & Co. KG**
**Flughafenstrasse 10**
**D-6103 Griesheim (DE)**

(72) Erfinder : **Brandt, Horst, Dr.-Ing.**
**Albert-Schweitzer-Strasse 3**
**D-6108 Weiterstadt 1 (DE)**

(74) Vertreter : **Katscher, Helmut, Dipl.-Ing.**
**Bismarckstrasse 29**
**D-6100 Darmstadt (DE)**

## Beschreibung

Die Erfindung betrifft eine selbstschneidende Schnellbauschraube zur Befestigung von Faserplatten an einer Metallunterkonstruktion, mit einem mindestens einen Gewindegang tragenden Schraubenschaft, der in eine kegelige Bohrspitze übergeht, wobei das Gewinde auf dem Schraubenschaft endet und mit zwei nahe dem Schaftende angeordneten, beim Auftreffen auf die Metallunterkonstruktion abbrechbaren Schneidflügeln.

Zur Befestigung von Mineralfaserplatten und ähnlichen Platten an einer Metallunterkonstruktion, die beispielsweise aus Blechträgern besteht, sind selbstschneidende Bauschrauben gebräuchlich (DE-A-25 39 365), bei denen der Schraubenkern ein zweigängiges Gewinde trägt, dessen einer Gewindegang bis zur kegeligen Schraubenspitze verläuft. Bei Eindringen der Schraubenspitze in die Metallunterkonstruktion beginnt dieser Gewindegang ein Gewinde zu schneiden.

Die Schraubenbohrung in der zu befestigenden Mineralfaserplatte wird ebenfalls durch die Schraubenspitze geformt, wobei der Werkstoff nicht aus der Bohrung entfernt, sondern nur seitlich verdrängt wird. Für Faserplatten, die aus Faserwerkstoffen hoher Festigkeit kompakt gepreßt sind, bereitet die Verwendung dieser bekannten Bauschrauben jedoch Schwierigkeiten, weil der zu verdrängende Werkstoff der Schraube einen hohen Widerstand entgegensetzt, so daß eine verhältnismäßig hohe Axialkraft aufgebracht werden muß, damit die Schnellbauschraube die Faserplatte durchdringen kann. Da die Gewindegänge, die zur Befestigung in der Metallunterkonstruktion vorgesehen sind, hierbei den bereits seitlich verdichteten Faserwerkstoff durchdringen müssen, entsteht ein ausgeformtes Gewinde im verdichteten Faserwerkstoff, so daß eine feste Verbindung zwischen Stahlunterkonstruktion und Faserwerkstoff nicht zustande kommt, zudem entsteht eine erhebliche Reibungskraft, so daß zum Eindrehen der Bauschraube ein sehr hohes Drehmoment aufgewandt werden muß.

Bei Bauschrauben der eingangs genannten Gattung, die zur Befestigung von Holzplatten auf einer Stahlunterkonstruktion bestimmt sind, ist es bekannt, am unteren Ende des Schraubenschafts zwei einander gegenüberliegende Schneidflügel anzubringen, die beide im Holz bis über den Außendurchmesser des Gewindes hinaus schneiden (DE-B-1500 798). Die Schneidflügel erzeugen im Holz eine Bohrung, durch die die Gewindegänge ohne Reibung mit dem Holz hindurchtreten können. Beim Auftreffen auf das Metall brechen die beiden Schneidflügel ab. Für die Befestigung von Faserplatten aus Faserwerkstoffen hoher Festigkeit sind diese bekannten Bauschrauben jedoch nicht geeignet, weil auch hierbei die Bohrspitze allein bereits die gesamte Bohrung bis zum Kerndurchmesser des Schraubenschafts herstellen müßte.

Aufgabe der Erfindung ist es daher, eine Schnellbauschraube der eingangs genannten Art so auszubilden, daß sie auch zur Verwendung bei Faserplatten aus Faserwerkstoffen hoher Festigkeit geeignet ist.

Diese Aufgabe wird erfindungsgemäß dadurch gelöst, daß die beiden Schneidflügel auf der kegeligen Bohrspitze angeordnet sind und bis zu einem Durchmesser schneiden, der zwischen dem Gewindekerndurchmesser und dem äußeren Gewindespitzendurchmesser liegt.

Da die beiden Schneidflügel auf der sich verjüngenden Bohrspitze sitzen, muß die Bohrspitze den Faserwerkstoff nur bis zu einem Durchmesser verdrängen, der wesentlich kleiner als der Schraubenschaftdurchmesser ist. An dem Zerspanen bzw. Verdrängen des Faserwerkstoffes ist die Bohrspitze nur mit ihrem vorderen, über die Schneidflügel hinausragenden Abschnitt beteiligt, so daß der Widerstand, der sich der Bohrspitze entgegensetzt, nur gering ist. In den übrigen, sich nach außen anschließenden Durchmesserbereichen übernehmen die beiden Schneidflügel das Zerspanen des Faserwerkstoffs.

Da die vorgesehene Bruchlinie der beiden Schneidflügel auf der sich verjüngenden Bohrspitze und somit auf einem Durchmesser liegen, der geringer als der Schraubenschaftdurchmesser ist, ist das für das Abbrechen der Schneidflügel erforderliche Drehmoment verhältnismäßig gering ; die beiden Schneidflügel brechen deshalb sofort beim Auftreffen auf. das Metall der Unterkonstruktion ab. Es hat sich gezeigt, daß der vordere Abschnitt der Bohrspitze schmal und spitz genug ist, um allein durch die beim Einschrauben aufgebrachte Axialkraft in das Metall einzudringen, so daß die hierfür üblichen Schneidkerben in der Mantelfläche der Bohrspitze nicht erforderlich sind ; sie können jedoch zusätzlich vorgesehen werden.

Wenn die Bohrspitze tiefer in das Metall eindringt, muß der hintere Teil der Bohrspitze zwar eine größere Metallmenge verdrängen ; da in diesem Abschnitt aber die Bruchflächen der beiden abgebrochenen Schneidflügel liegen, wirken diese Bruchflächen als Schneidkerben bzw. Schneiden, so daß in diesem Bereich die Materialverdrängung nicht nur durch die aufzubringende Axialkraft erfolgt, sondern mindestens teilweise durch einen schneidenden bzw. quetschenden Bohrvorgang.

Da sich auf dem Schraubenschaft kein Schneidflügel befindet, wird der hier beginnende Gewindegang bzw. werden die Gewindegänge (bei einem mehrgängigen Gewinde) nicht durch das Abbrechen eines Schneidflügels oder die danach zurückbleibende Bruchfläche beeinträchtigt.

Bei der erfindungsgemäßen Schnellbauschraube beginnt der Gewindeschneidvorgang erst, wenn die Bohrung in der Metallunterkonstruktion bis zum Gewindeschaftdurchmesser geformt ist.

In Weiterbildung des Erfindungsgedankens ist vorgesehen, daß die beiden Schneidflügel in axial gleicher Höhe auf der kegeligen Bohrspitze angeordnet sind. Dadurch wird zwar bewirkt, daß das für das Abbrechen der Schneidflügel erforderliche Moment von beiden Schneidflügeln gleichzeitig ausgelöst wird. Dieses Moment ist jedoch verhältnismäßig gering, weil der Beginn des Eingriffs der Schneidflügel an der Metallunterkonstruktion und damit der Bruchbeginn auf einem verhältnismäßig kleinen Durchmesser liegen. Die symmetrische Anordnung der beiden Schneidflügel bedingt einen symmetrischen Kraftverlauf, wodurch die Schnellbauschraube beim Eindringen in das Metall zentriert wird.

Zweckmäßigerweise haben deshalb die beiden Schneidflügel radial gleiche Abmessungen, damit auch schon beim Zerspanen des Faserwerkstoffs symmetrische Kraftverhältnisse herrschen, so daß die Schraube zentriert wird.

Weitere vorteilhafte Ausgestaltungen des Erfindungsgedankens sind Gegenstand weiterer Unteransprüche.

Die Erfindung wird nachfolgend an einem Ausführungsbeispiel näher erläutert, das in der Zeichnung dargestellt ist. Es zeigt :

Figur 1 eine selbstschneidende Schnellbauschraube in einer Seitenansicht und

Figur 2 eine Teilansicht in Richtung des Pfeiles II in Fig. 1.

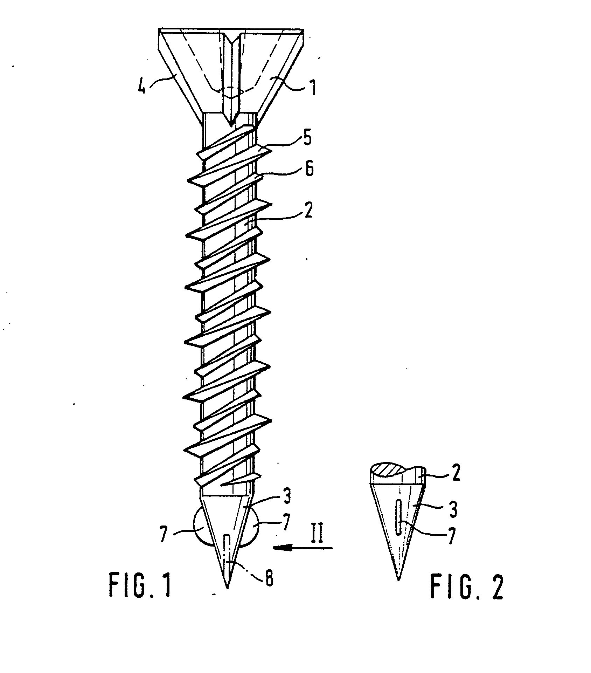

Die dargestellte aus Stahl bestehende Schnellbauschraube weist einen kegelstumpfförmigen Schraubenkopf 1, einen zylindrischen Schraubenschaft 2 und eine kegelige Bohrspitze 3 auf. Der mit einem in Fig. 1 nur angedeuteten Kreuzschlitz versehene Schraubenkopf 1 trägt an seiner Kegelmantelfläche Rippen 4, die das Eindringen des Schraubenkopfs 1 in die zu befestigende Faserplatte, beispielsweise Mineralfaserplatte, erleichtert.

Auf dem Schraubenschaft 2 befinden sich zwei unterschiedlich hohe Gewindegänge 5, 6, die bis zum unteren Ende des Schraubenschafts 2 verlaufen. Die Schraube ist als zweigängige Schraube ausgeführt.

Auf der kegeligen Bohrspitze 3, die mit einem Spitzenwinkel von etwa 30° ausgeführt ist, sind im Abstand zur Spitze der Schraube auf gegenüberliegenden Mantellinien zwei Schneidflügel 7 angeordnet, die als flache Fleckchen mit einer gekrümmten, vorzugsweise angenähert halbkreisförmigen Außenkante ausgeführt sind. Die beiden Schneidflügel 7 befinden sich in axial gleicher Höhe auf der Bohrspitze 3 und haben auch radial gleiche Abmessungen.

Mit ihren gekrümmten Außenkanten schneiden die Schneidflügel 7 das Material der Mineralfaserplatte bis zu einem Durchmesser, der zwischen dem Gewindekerndurchmesser (Durchmesser des Schraubenschafts 2) und dem Gewindespitzendurchmesser des höheren Gewindegangs 5 liegt. Dadurch wird in der Mineralfaserplatte eine Bohrung geschaffen, in die der Schraubenschaft 2 unbehindert eindringen kann. Der höhere Gewindegang 5 dringt geringfügig in die Bohrungswand der Mineralfaserplatte ein und führt die Schnellbauschraube. Der niedrigere Gewindegang 6 berührt die Bohrungswand nicht oder nur leicht.

Die beiden Schneidflügel 7 werden beim Durchdringen der zu befestigenden Mineralfaserplatte wirksam und zerspanen den größeren Volumenanteil der zu bildenden Bohrung, während nur der mittlere, kleinere Volumenanteil der Bohrung durch den vorderen Abschnitt der Bohrspitze 3 gebildet wird, der sich noch vor den beiden Schneidflügeln 7 befindet.

Wenn der vordere Abschnitt der Bohrspitze 3 in die Metallunterkonstruktion eingedrungen ist, treffen die beiden Schneidflügel 7 ebenfalls auf das Metall und brechen ab. Die dabei entstehenden Bruchkanten bzw. Bruchflächen wirken beim weiteren Eindringen der Bohrspitze in das Metall als Schneiden oder Schneidkerben.

Wie in Fig. 1 mit gestrichelter Linie angedeutet ist, können auf dem vorderen Abschnitt der Bohrspitze 3 zwei gegenüberliegende Schneidkerben 8 vorgesehen sein, die das Eindringen der Bohrspitze 3 in das Metall bei größeren Blechdicken erleichtern. Auch beim Anbringen von Asbestfaserplatten od. dgl. bieten die Schneidkerben 8 Vorteile. Im allgemeinen sind diese Schneidkerben 8 jedoch nicht erforderlich.

## Patentansprüche

1. Selbstschneidende Schnellbauschraube zur Befestigung von Faserplatten an einer Metallunterkonstruktion, mit einem mindestens einen Gewindegang (5 bzw. 6) tragenden Schraubenschaft (2), der in eine kegelige Bohrspitze (3) übergeht, wobei das Gewinde (5 bzw. 6) auf dem Schraubenschaft (2) endet und mit zwei nahe dem Schaftende (2) angeordneten, beim Auftreffen auf die Metallunterkonstruktion abbrechbaren Schneidflügeln (7), dadurch gekennzeichnet, daß die beiden Schneidflügel (7) auf der kegeligen Bohrspitze (3) angeordnet sind und bis zu einem Durchmesser schneiden, der zwischen dem Gewindekerndurchmesser und dem äußeren Gewindespitzendurchmesser liegt.

2. Schnellbauschraube nach Anspruch 1, dadurch gekennzeichnet, daß die beiden Schneidflügel (7) in axial gleicher Höhe auf der kegeligen Bohrspitze (3) angeordnet sind.

3. Schnellbauschraube nach Anspruch 1, dadurch gekennzeichnet, daß die beiden Schneidflügel (7) radial gleiche Abmessungen haben.

4. Schnellbauschraube nach Anspruch 1, dadurch gekennzeichnet, daß in der kegeligen Bohrspitze (3) Schneidkerben (8) vorgesehen sind.

5. Schnellbauschraube nach Anspruch 4, dadurch gekennzeichnet, daß sich die Schneidkerben (8) jeweils längs einer Kegelmantellinie der Bohrspitze (3) erstrecken.

6. Schnellbauschraube nach Anspruch 1, dadurch gekennzeichnet, daß auf dem Schraubenschaft (2) zwei unterschiedlich hohe Gewindegänge (5, 6) angeordnet sind.

**Claims**

1. Self-tapping rapid construction screw for fixing fibre boards to a metal substructure, with a screw shank (2) carrying at least one thread (5 and/or 6) which goes into a tapered drilling point (3), the thread (5 and/or 6) ending on the screw shank (2) and having two cutting vanes (7) arranged near the end of the shank (2) which can be broken off when they hit against the metal substructure, characterised by the fact that the two cutting vanes (7) are arranged on the tapered drilling point (3) and cut up to a diameter between the thread core diameter and the diameter of the outside thread point.

2. Rapid construction screw according to Claim 1, characterised by the fact that the two cutting vanes (7) are arranged axially at the same height on the tapered drilling point (3).

3. Rapid construction screw according to Claim 1, characterised by the fact that the two cutting vanes (7) have radially identical dimensions.

4. Rapid construction screw according to Claim 1, characterised by the fact that cutting notches (8) have been provided in the tapered drilling point (3).

5. Rapid construction screw according to Claim 4, characterised by the fact that the cutting notches (8) extend in each case along a line of the envelope of the cone of the drilling point (3).

6. Rapid construction screw according to Claim 1, characterised by the fact that two threads of different heights (5, 6) are arranged on the screw shank (2).

**Revendications**

1. Vis auto-taraudeuse pour construction rapide pour la fixation de plaques en fibres à une sous-structure métallique, dans laquelle la tige (2), qui se prolonge en une pointe taraudeuse conique (3) où le filet (5 et 6) s'achève à la tige de vis 2, comporte au moins un pas de vis (5 et 6) et porte, disposées près de l'extrémité de la tige (2), deux ailettes taraudeuses (7) qui peuvent s'arracher en cassant lorsqu'elles arrivent en contact avec la sous-structure métallique, caractérisée en ce que les deux ailettes taraudeuses (7) se placent sur la pointe taraudeuse conique (3) et découpent jusqu'à un diamètre qui se situe entre le diamètre du noyau du filet et le diamètre extérieur de la pointe du filet.

2. Vis auto-taraudeuse pour construction rapide selon la revendication 1, caractérisée en ce que les deux ailettes taraudeuses (7) sont disposées sur la pointe taraudeuse conique (3) à une même hauteur axiale.

3. Vis auto-taraudeuse pour construction rapide selon la revendication 1, caractérisée en ce que les deux ailettes taraudeuses (7) ont les mêmes dimensions radiales.

4. Vis auto-taraudeuse pour construction rapide selon la revendication 1, caractérisée en ce qu'il est prévu des encoches taraudeuses (8) à la pointe taraudeuse conique (3).

5. Vis auto-taraudeuse pour construction rapide selon la revendication 4, caractérisée en ce que les encoches taraudeuses (8) s'étendent chaque fois le long d'une génératrice de la surface conique de la pointe taraudeuse (3).

6. Vis auto-taraudeuse pour construction rapide selon la revendication 1, caractérisée en ce qu'on dispose deux pas de vis (5, 6) de hauteurs différentes sur la tige de vis (2).

FIG. 1

FIG. 2